(19) Europäisches Patentamt
European Patent Office
Office européen des brevets

(11) Numéro de publication : **0 216 672 B1**

(12) **FASCICULE DE BREVET EUROPEEN**

(45) Date de publication du fascicule du brevet : **16.01.91 Bulletin 91/03**

(51) Int. Cl.$^5$ : **C09K 19/42**, C09K 19/30

(21) Numéro de dépôt : **86401862.7**

(22) Date de dépôt : **22.08.86**

(54) **Mélange de cristaux liquides nématiques comportant un 1-(alkyl cyclohexyl)-2-(alkyl fluorbiphénylyl) éthane.**

(30) Priorité : **26.08.85 FR 8512727**

(43) Date de publication de la demande : **01.04.87 Bulletin 87/14**

(45) Mention de la délivrance du brevet : **16.01.91 Bulletin 91/03**

(84) Etats contractants désignés : **CH DE FR GB IT LI NL**

(56) Documents cités :
**EP-A- 0 058 512**
**DE-A- 3 131 450**
**GB-A- 2 134 110**

(73) Titulaire : **COMMISSARIAT A L'ENERGIE ATOMIQUE Etablissement de Caractère Scientifique Technique et Industriel
31/33, rue de la Fédération
F-75015 Paris (FR)**

(72) Inventeur : **Butez, Marc
11, rue de Sault
F-38000 Grenoble (FR)**
Inventeur : **Rabas, Laurence
270, avenue Ambroise Croizat
F-38400 Saint-Martin-d'Heres (FR)**
Inventeur : **Vinet, Françoise
52, rue Thiers
F-38000 Grenoble (FR)**

(74) Mandataire : **Mongrédien, André et al
c/o BREVATOME 25, rue de Ponthieu
F-75008 Paris (FR)**

EP 0 216 672 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un mélange de cristaux liquides nématiques, utilisables dans des dispositifs mettant en jeu l'effet de biréfringence contrôlé électriquement.

Dans certains dispositifs à cristaux liquides, l'effet électro-optique utilisé est la biréfringence contrôlée électriquement (BCE). Cet effet correspond à une déformation sous champ électrique d'une phase nématique à anisotropie diélectrique $\Delta\varepsilon$ négative, $\Delta\varepsilon$ représentant la différence entre la constante di-électrique $\varepsilon_a$ parallèle au grand axe moléculaire du cristal et la constante diélectrique $\varepsilon_b$ perpendiculaire à ce grand axe.

Dans les dispositifs à cristaux liquides, il est nécessaire d'utiliser des matériaux nématiques permettant un taux élevé de multiplexage, c'est-à-dire un nombre important de lignes de l'écran adressables électriquement afin de visualiser un haut taux d'informations. Ce taux de multiplexage k peut s'exprimer en fonction de la tension appliquée aux bornes du dispositif (V) et de la tension de seuil de déformation du cristal ($V_S$) par la formule :

$$k < \left(\frac{V^2 + V_S^2}{V^2 - V_S^2}\right)^2$$

Pour un taux de multiplexage donné, il est nécessaire d'avoir un angle de basculement moléculaire ($\Phi_M$) au centre de la cellule à cristaux liquides le plus grand possible pour obtenir le meilleur contraste entre les deux états noir et blanc du cristal sous l'action du champ électrique. Pour de faibles angles de basculement $\Phi_M$ est directement liée à la tension de seuil de déformation du cristal $V_S$ et au rapport des constantes élastiques de flexion $K_{33}$ et d'éventail $K_{11}$ du cristal liquide. En effet, $\Phi_M$ est donné par la formule :

$$\Phi_M = \frac{V^2 - V_S^2}{V^2 (\frac{2}{3} + \left|\frac{\Delta\epsilon}{\epsilon a}\right| - \eta_{31} V_S^2}$$

$$\text{avec } V_S = 2\pi\sqrt{\frac{\pi K_{33}}{\Delta\epsilon}}$$

$$\Delta\epsilon = \epsilon a - \epsilon b$$

$$\text{dans laquelle } \eta_{31} = \frac{1 - K_{33}}{K_{11}}$$

Dans ces conditions, la biréfringence induite électriquement est alors de la forme :

$$\Delta n = \left(\frac{\sin^2\Phi}{n_o^2} + \frac{\cos^2\Phi}{n_e^2}\right)^{1/2} - n_0$$

avec $\Phi \simeq \Phi_M \cos\frac{\pi}{e} Z$

dans laquelle $n_e$ et $n_o$ sont les indices extraordinaire et ordinaire du cristal, e l'épaisseur du cristal liquide et Z sa position dans la cellule.

L'intensité relative transmise par le dispositif à cristal liquide entre deux polariseurs croisés est donnée par la relation :

$$\frac{I}{I_0} = \sin^2 \pi \frac{\Delta n \; e}{\lambda}$$

dans laquelle $\Delta n$ est égal à $n_e - n_O$, et $\lambda$ est la longueur d'onde du faisceau lumineux éclairant le dispositif. Il en résulte que les paramètres les plus importants du matériau sont $\frac{K_{33}}{K_{11}}$, $\Delta n$, $\Delta\varepsilon$ ainsi que la gamme de mésomorphisme $\Delta T$ du cristal.

Parmi ces paramètres, le rapport $\frac{K_{33}}{K_{11}}$ joue un rôle important car il détermine la raideur de la pente de la courbe de transfert électro-optique et donc la multiplexabilité du matériau utilisé ; aussi, ce rapport doit être le plus grand possible. De même, les valeurs de $\Delta n$ et de $\Delta\varepsilon$ sont importantes pour obtenir le taux de multiplexabilité voulue. Généralement, on recherche le meilleur compromis entre toutes ces valeurs.

Les cristaux liquides nématiques utilisés actuellement dans des dispositifs à cristaux liquides mettant en jeu l'effet de biréfringence contrôlé électriquement, présentent généralement une multiplexabilité de l'ordre de 1/250, avec des rapports $K_{33}/K_{11}$ de l'ordre de 1 à 1,2. Cependant, l'obtention sur un écran d'un grand nombre d'informations avec un contraste convenable ne peut avoir lieu qu'au prix d'une amélioration des propriétés spécifiques des cristaux liquides, en particulier des constantes élastiques et de la biréfringence. De plus, il serait intéressant de disposer de matériaux ayant une multiplexabilité élevée avec une grande gamme de mésomorphisme et une bonne stabilité chimique.

La présente invention a précisément pour objet des mélanges de cristaux liquides nématiques présentant ces caractéristiques améliorées.

Le mélange de cristaux liquides nématiques selon l'invention est constitué par :

– au moins un 1-(alkylcyclohexyl)-2-(alkylfluorobiphénylyl) éthane de formule :

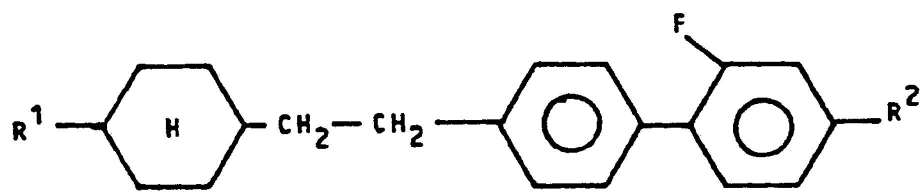
(I)

dans laquelle $R^1$ et $R^2$ qui peuvent être identiques ou différents, sont des radicaux alkyle de 1 à 7 atomes de carbone, et

– au moins un composé choisi parmi :

a) les akylbicyclooctane carboxylates d'alkyl fluorophényle de formule :

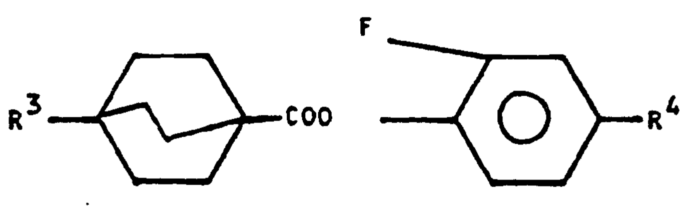
(II)

dans laquelle $R^3$ et $R^4$ qui peuvent être identiques ou différents, sont des radicaux alkyle de 1 à 7 atomes de carbone,

b) les biphénylbicyclohexyldialkyle de formule :

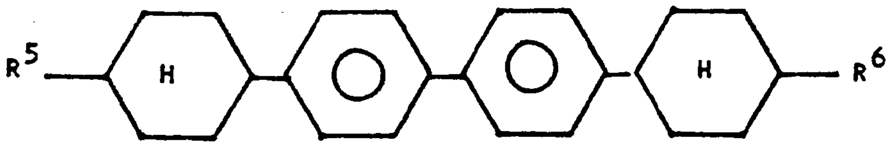

(III)

dans laquelle $R^5$ et $R^6$ sont des radicaux alkyle de 1 à 7 atomes de carbone,
c) les alkylcyclohexylcarboxylates de dicyanoalcoxyphényle répondant à la formule :

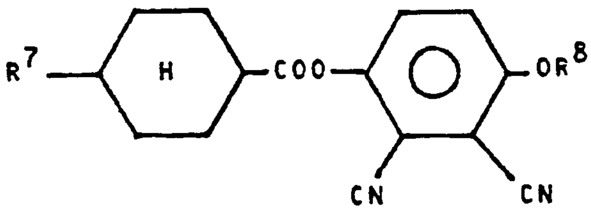

(IV)

dans laquelle $R^7$ et $R^8$ qui peuvent être identiques ou différents, sont des radicaux alkyle de 1 à 7 atomes de carbone,
d) les bicyclohexylcarbonitriledialkyle ou alkylalkylène répondant à la formule :

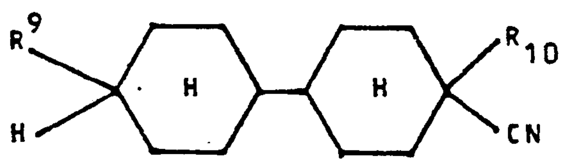

(V)

dans laquelle $R^9$ et $R^{10}$ qui peuvent être identiques ou différents, sont des radicaux alkyle ou alkylène de 1 à 7 atomes de carbone,
e) les alkylcyclohexylbenzoates de dicyanoalcoxyphényle de formule :

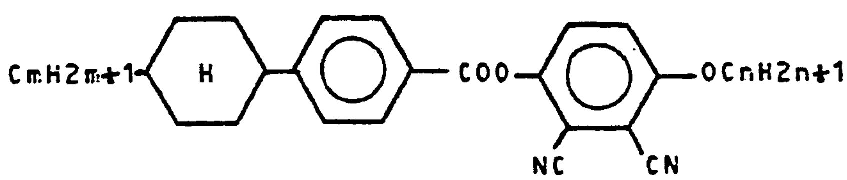

(VI)

dans laquelle n et m sont des nombres entiers allant de 1 à 7, et
f) les cyclohexylbiphényle de formule :

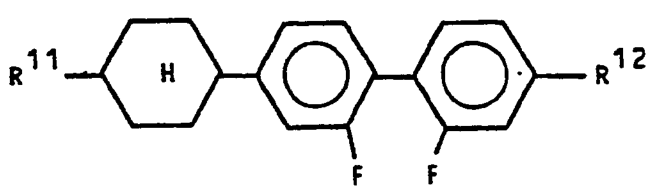

(VII)

dans laquelle $R^{11}$ est un radical alkyle de 1 à 12 atomes de carbone et $R^{12}$ est un radical alkyle ou alkoxy de 1 à 12 atomes de carbone ;
ledit mélange comprenant en poids :

– de 30 à 90% au total du ou des 1-(alkylcyclohexyl)-2-(alkylfluorobiphénylyl) éthane,
– de 0 à 20% au total du ou des alkylbicyclooctane carboxylates d'alkylfluorophényle,
– de 0 à 12% au total du ou des biphénylbicyclohexyldialkyle,
– de 0 à 12% au total du ou des alkylcyclohexylcarboxylates de dicyanoalcoxyphényle,
– de 0 à 40% au total du ou des bicyclohexylcarbonitriledialkyle ou alkylalkylène,
– de 0 à 12% au total du ou des alkylcyclohexyl benzoates de dicyanoalcoxyphényle de formule (VI), et
– de 0 à 45% au total du ou des cyclohexylbiphényle de formule (VII) ; à condition que la teneur totale dudit mélange en alkylcyclohexyl carboxylate(s) de dicyanoalcoxyphényle de formule (IV) et en alkylcyclohexylbenzoate(s) de dicyanoalcoxyphényle de formule (VI) ne dépasse pas 12% en poids et que ledit mélange ait une anisotropie optique $\Delta n \geq 0,11$ et un rapport de la constante élastique de flexion $K_{33}$ à la constante élastique d'éventail $K_{11}$ : $K_{33}/K_{11} \geq 1,2$.

Grâce à l'association d'au moins 1-(alkylcyclohexyl)-2-(alkylfluorobiphénylyl) éthane avec un ou plusieurs composés choisis parmi les composés a), b), c), d), e) et f) mentionnés ci-dessus, on obtient une composition de cristal liquide présentant le meilleur compromis entre tous les paramètres et une amélioration notable du rapport $K_{33}/K_{11}$ et de la gamme de mésomorphisme $\Delta T$.

Les différents constituants du mélange sont pour la plupart des produits connus, et ils peuvent être préparés par des procédés classiques.

Ainsi, les 1-(alkylcyclohexyl)-2-(alkylfluorobiphénylyl) éthanes de formule (I) peuvent être préparés en utilisant la méthode décrite dans le brevet anglais GB-A 2 133 795.

A titre d'exemple de composés de ce type susceptibles d'être utilisés dans l'invention, on peut citer le 1-(trans-4-n-éthylcyclohexyl)-2- [2'-fluoro-4'-(2-éthyl)-4-biphénylyl] éthane (I22) de formule :

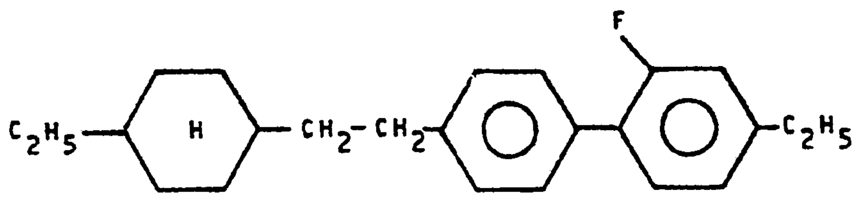
(VIII)

Le 1-(trans-4-n-propylcyclohexyl)-2- [2'fluoro-4'-(2-pentyl)-4-biphénylyl] éthane (I35) de formule :

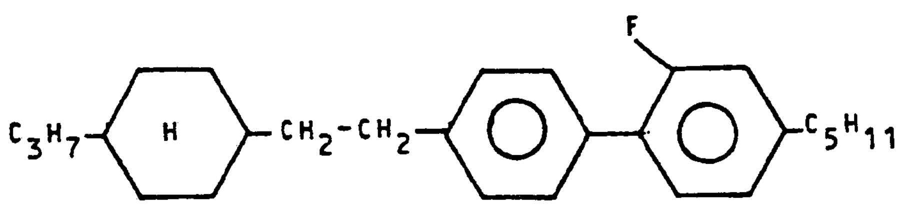
(IX)

Le 1-(trans-4-n-propylcyclohexyl)-2-[2'-fluoro-4'-(2-éthyl)-4-biphénylyl] éthane (I32) de formule :

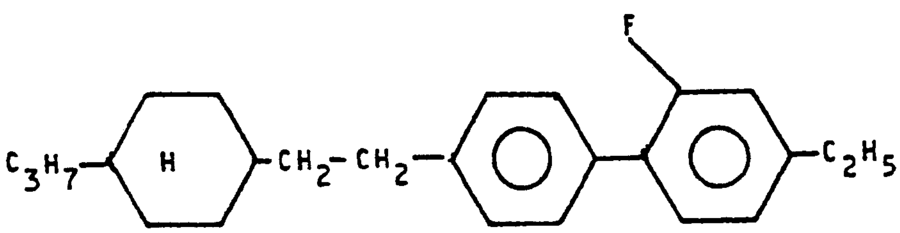
(X)

Le 1-(trans-4-n-pentylcyclohexyl)-2-[2'-fluoro-4'-(2-éthyl)-4-biphénylyl] éthane (I52) de formule :

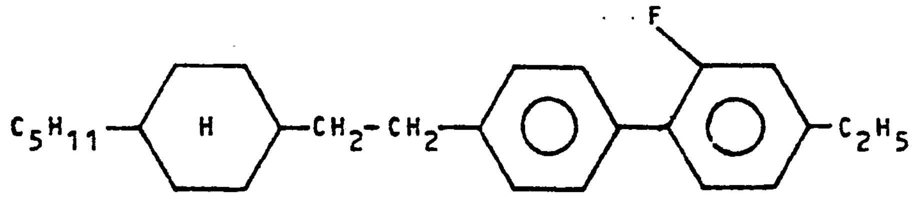
(XI)

Les alkylbicyclooctane carboxylates d'alkylfluorophényle de formule (II) peuvent être préparés par la méthode décrite par G.W.Gray et S.M.Kelly dans Mol. Cryst. Liq. Cryst. (1981), vol.75, p.109-119.

A titre d'exemples de composés de ce type susceptibles d'être utilisés, on peut citer le 4-n-pentyl-bicyclooctane carboxylate de 2-fluoro-4-n-pentyl-phényle (BCO55F) de formule :

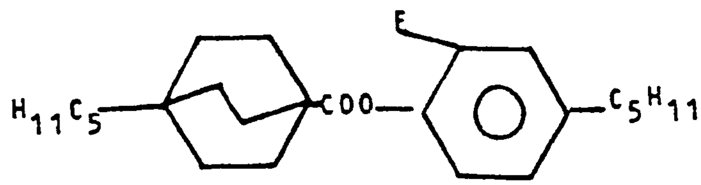
(XII)

et le 4-n-pentyl-bicyclooctane carboxylate de 2-fluoro-4-n-heptylphényle (BC057F) de formule :

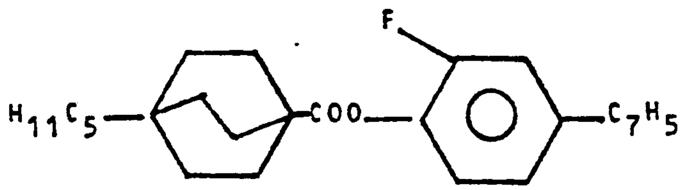
(XIII)

Les biphényl bicyclohexyldialkyle de formule III peuvent être préparés par la méthode décrite par R. Eidenschink D. Erdmann, J.Krause et L.Pohl dans Angew chem. 89-103 (1977).

A titre d'exemple de tels composés, on peut citer le 4-(trans-4-n-pentylcyclohexyl)-4'-(trans-4-n-propylcyclohexyl) biphényle (CBC53) de formule :

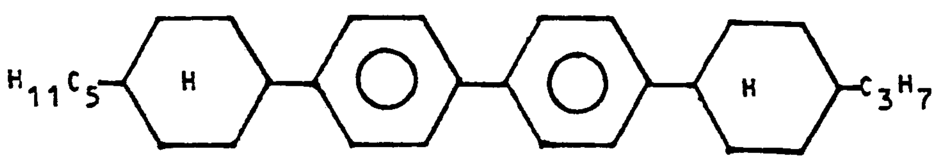
(XIV)

Les alkylcyclohexylcarboxylates de dicyanoalkoxyphényle de formule (IV) peuvent être préparés par les techniques décrites par K. Wallenfels, G. Bachmann, D.Hofmann et R. Kern dans Tetrahedron, (1965), vol.21, p.2239 à 2256. Le composé II (page 2241) de cet article

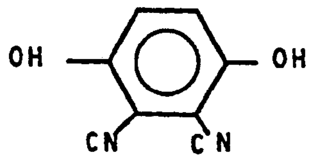

est traité par un chlorure d'acide d'un alkyl cyclohexyl

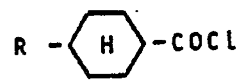

qui donne

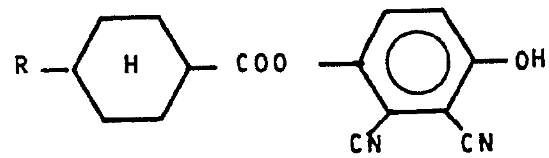

ce dernier composé est ensuite traité par un bromure d'alkyle qui conduit au dérivé

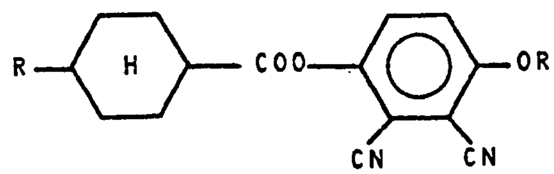

A titre d'exemples de tels composés, on peut citer ceux donnés dans le tableau 1 qui suit.

TABLEAU 1

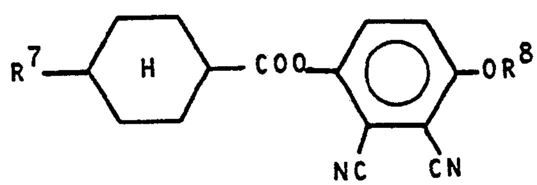

| $R^7$ | $R^8$ | K-I (°C) | N-I (°C) | Δε |
|---|---|---|---|---|
| $C_4H_9$ | $C_4H_9$ | 89 | (52) | -22 |
| $C_5H_{11}$ | $C_4H_9$ | 93 | (64) | -22 |
| $C_6H_{13}$ | $C_4H_9$ | 87 | (70) | -22 |
| $C_3H_7$ | $C_5H_{11}$ | 87 | (55) | -23 |
| $C_4H_9$ | $C_5H_{11}$ | 83 | (67) | -21 |
| $C_5H_{11}$ | $C_5H_{11}$ | 102 | (77) | -20 |

K-I = température de transition solide-liquide isotrope

N-I = température de transition nématique-isotrope

Parmi les composés du tableau 1, on peut utiliser en particulier le trans-4-n-pentylcyclohexyl-1-carboxylate de 4-n-butoxy-2,3-dicyanophényle (5HENO4) de formule :

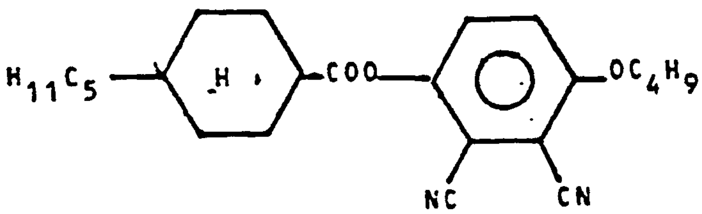 (XV)

Les bicyclohexylcarbonitriledialkyle ou alkylalkylène de formule (V) peuvent être préparés par la méthode décrite par R.Eidenschink, G.Haas, M.Römer et B.S. Scheuble dans Angew Chem. 96 (1984) n°2 p.151.

A titre d'exemples de tels composés, on peut citer le 4 α n-heptyl, 4'α n-butyl-1 α, 1' α bicyclohexyl-4 β-carbonitrile (CCN47) de formule :

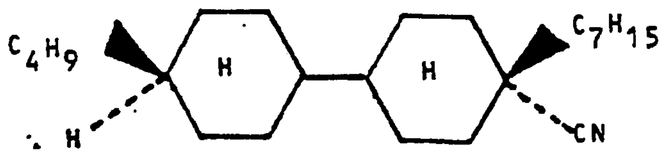 (XVI)

le 4α, 4'α di-n-pentyl-1 α, 1'α bicyclohexyl-4 β-carbonitrile (CCN55) de formule :

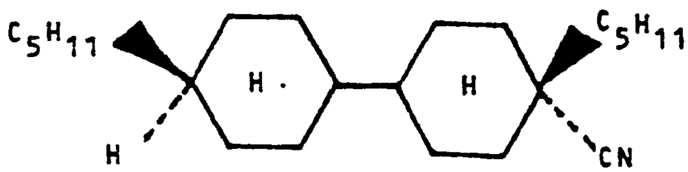 (XVII)

et le 4α n-pentyl, 4'α(propényl-2)-1α, 1'α bicyclohexyl-4β-carbonitrile (5CCOd3) de formule :

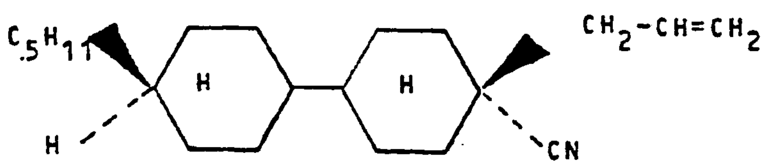 (XVIII)

Les alkylcyclohexylbenzoates de dicyanoalcoxyphényle de formule (VI) peuvent être préparés par des techniques classiques par exemple par la méthode décrite par K. Wallenfels, G. Bachmann, D. Hofmann et R. Kern dans Tetrahedron, (1965), vol.21, p.2239 à 2256, mentionnée précédemment pour préparer les composés de formule (IV) en utilisant les chlorures d'acide

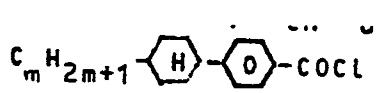

préparés selon la méthode décrite par T. SZCZUCINSKI et R. DABROWSKI Mol. Cryst. Liq. Cryst. 88 55 (1982).

A titre d'exemples de ces composés, on peut citer le composé dans lequel m=5 et n=4, soit le pentylcyclohexylbenzoate de dicyanobutoxyphényle, et le composé dans lequel m=5 et n=5, soit le pentylcyclohexylbenzoate de dicyanopentoxyphényle.

Ces des composés présentent les caractéristiques données dans le tableau 2 qui suit.

TABLEAU 2

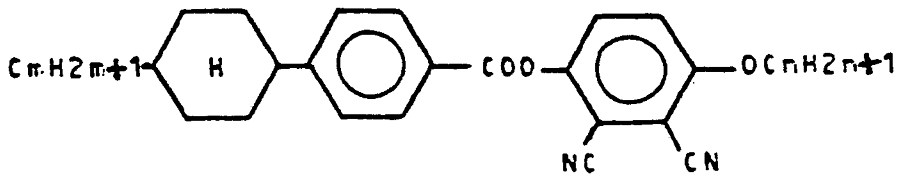

(VI)

| m | n | K-N (°C) | N-I (°C) | Δε |
|---|---|---|---|---|
| 5 | 4 | 138 | 148 | -19 |
| 5 | 5 | 134 | 144 | -18 |

K-N = transition solide nématique

N-I = transition nématique isotrope

Les cyclohexylbiphényles de formule VII peuvent être préparés par les techniques décrites dans le brevet américain US-A-4 415 470. A titre d'exemple de tels composés, on peut citer le cyclohexylbiphényle de formule :

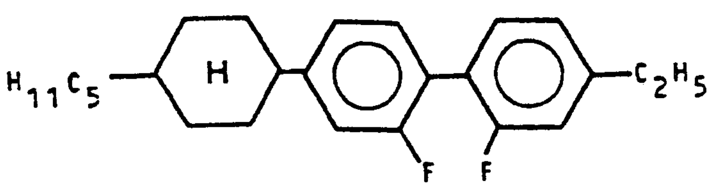

(XIX)

que l'on désignera ci-après par les termes BCH52FF.

Généralement, les mélanges de l'invention, comprennent plusieurs constituants, en particulier plusieurs 1-(alkylcyclohexyl)-2-(alkylfluorobiphénylyl) éthane et plusieurs constituants choisis parmi les composés a), b), c), d), e) et f).

Toutefois, lorsque les mélanges de l'invention comprennent simultanément des composés de formule (IV) et des composés de formule (VI), il est nécessaire comme on l'a vu précédemment que la teneur totale du mélange en composés de formule (IV) et de formule (VI) ne dépasse pas 12% en poids.

Par ailleurs, lorsque le mélange renferme plusieurs constituants du même type, ceux-ci peuvent être présents sous la forme de mélanges eutectiques.

Selon un premier mode de réalisation de l'invention, le mélange comprend uniquement un ou plusieurs composés de formule (I) et au moins un composé choisi parmi les composés de formules (II), (III), (IV) et (V).

Dans ce cas, le mélange comprend avantageusement en poids :

- de 60 à 90% au total du ou des 1-(alkylcyclohexyl)-2-(alkylfluorobiphénylyl) éthane de formule (I),
- de 0 à 15% au total du ou des alkylbicyclooctanecarboxylates d'alkylfluorophényle de formule (II),
- de 0 à 12% au total du ou des biphénylbicyclohexyldialkyle de formule (III),
- de 0 à 12% a total du ou des alkylcyclohexylcarboxylates de dicyanoalkoxyphényle de formule (IV), et

– de 0 à 40% au total du ou des bicyclohexylcarbonitrile dialkyle ou alkylalkylène de formule (V).

Parmi ces mélanges, on peut avoir en particulier des mélanges ne comprenant que deux types de constituants qui sont un ou plusieurs composés de formule (I) et un ou plusieurs composés de formule (V).

Avantageusement, un tel mélange comprend en poids de 60 à 90% au total du ou des 1-(alkylcyclohexyl)-2-(alkylfluorobiphénylyl) éthane de formule (I) et 10 à 40% au total du ou des bicyclohexylcarbonitrile dialkyle ou alkylalkylène de formule (V).

Dans ce premier mode de réalisation de l'invention, on peut aussi avoir des mélanges comprenant différents constituants. A titre d'exemple de tels mélanges, on peut citer les mélanges comprenant :

– 82 à 86% en poids au total d'un ou plusieurs 1-(alkylcyclohexyl)-2-(alkylfluorobiphénylyl) éthane de formule (I),
– de 5 à 12,7% au total du ou des alkylbicyclooctanecarboxylates d'alkylfluorophényle de formule (II),
– 1,5 à 3% au total du ou des biphénylbicyclohexyldialkyle de formule (III), et
– 3 à 4% au total du ou des alkylcyclohexylcarboxylates de dicyanoalkoxyphényle de formule (IV).

Dans un tel mélange, le ou les composés de formule (I) sont avantageusement constitués par le mélange eutectique de 1-(trans-4-n-propylcyclohexyl)-2-[2'-fluoro-4'-(2-pentyl)-4-biphénylyl] éthane, de 1-(trans-4-n-propylcyclohexyl)-2- [2'-fluoro-4'-(2-éthyl)-4-biphénylyl] éthane et de 1-(trans-4-n-pentylcyclohexyl)-2- [2'-fluoro-4'-(2-éthyl)-4-biphénylyl] éthane ; les alkyl bicyclooctane carboxylates d'alkyl fluorophényle de formule II peuvent comprendre de 5 à 8,7% de 4-n-pentyl bicyclooctanecarboxylate de 2-fluoro-4-n-pentylphényle, et de 0 à 5% de 4-n-pentyl bicyclooctanecarboxylate de 2-fluoro-4-n-heptylphényle ; le biphényl bicyclohexyldialkyle de formule III est avantageusement le 4-(trans-4-n-pentylcyclohexyl)-4'-(trans-4-n-propylcyclohexyl) biphényle ; et l'alkylcyclohexylcarboxylate de dicyano alkoxyphényle de formule IV est avantageusement le trans-4-n-pentyl cyclohexyl-1-carboxylate de 4-n-butoxyl-2,3-dicyanophényle.

Selon un deuxième mode de réalisation de l'invention, le mélange comprend un composé de formule (I), un composé de formule (VII) et un ou plusieurs composés choisis parmi les composés de formule (II), (III), (IV), (V) et (VI).

Dans ce cas le mélange de cristaux liquides comprend avantageusement en poids :

– de 30 à 85% au total du ou des 1-(alkylcyclohexyl)-2 (alkylfluorobiphénylyl) éthane de formule (I),
– de 0 à 20% au total du ou des alkyl bicyclooctane carboxylates d'alkyl fluorophényle de formule (II),
– de 0 à 12% au total du ou des biphénylbicyclohexyldialkyle de formule III,
– de 0 à 12% au total du ou des alkylcyclohexyl carboxylates de dicyanoalcoxyphényle de formule (IV),
– de 0 à 40% au total du ou des bicyclohexylcarbonitrile dialkyle ou alkylalkylène de formule (V),
– de 0 à 12% au total du ou des alkylcyclohexylbenzoates de dicyanoalcoxyphényle de formule (VI), et
– de 15 à 40% au total du ou des cyclohexylbiphényle de formule (VII).

Selon une première variante de ce deuxième mode de réalisation de l'invention, le mélange comprend en poids :

– de 75 à 85% au total du ou des 1-(alkylcyclohexyl)-2 (alkylfluorobiphénylyl) éthane de formule (I),
– de 14 à 18% au total du ou des cyclohexylbiphényle de formule (VII), et
– de 1 à 7% au total du ou des alkylcyclohexylcarboxylates de dicyanoalcoxyphényle de formule (IV) et/ou des bicyclohexylcarbonitrile dialkyle ou alkylalkylène de formule (V).

Selon une deuxième variante de ce deuxième mode de réalisation de l'invention, le mélange comprend en poids :

– de 35 à 45% au total du ou des 1-(alkylcyclohexyl)-2 (alkylfluorobiphénylyl) éthane de formule (I),
– de 30 à 40% au total du ou des cyclohexylbiphényle de formule (VII), et
– de 15 à 30% au total d'un ou plusieurs composés choisis parmi les alkylbicyclooctane carboxylates d'alkylfluorophényle de formule (II), les biphénylbicyclohexyl-dialkyle de formule (III), les alkylcyclohexylcarboxylates de dicyanoalkoxyphényle de formule (IV), les bicyclohexylcarbonitriledialkyle ou alkylalkylène de formule (V) et les alkylcyclohexylbenzoates de dicyanoalkoxyphényle de formule (VI).

Les mélanges des cristaux liquides de l'invention peuvent être utilisés comme éléments actifs dans les dispositifs à cristaux liquides mettant en jeu l'effet de biréfringence contrôlée électriquement.

D'autres caractéristiques et avantages de l'invention apparaîtront mieux à la lecture des exemples suivants donnés bien entendu à titre illustratif et non limitatif.

La figure unique annexée représente en coupe verticale un dispositif d'affichage à cristal liquide utilisant les mélanges de l'invention.

Exemple 1

On prépare un mélange de cristaux liquides comportant 67% en poids de I22 de formule (VIII) et 33% en poids de CCN55 de formule (XVII). On obtient ainsi un mélange de cristaux liquides présentant une phase mésomorphe nématique dans la gamme de températures allant de −3°C à 64°C.

On mesure l'anisotropie diélectrique $\Delta\varepsilon$, l'anisotropie optique $\Delta n$ et le rapport $K_{33}/K_{11}$ du mélange obtenu par des méthodes classiques et l'on obtient les valeurs suivantes :

- $\Delta n = 0,11$,
- $\Delta\varepsilon = -2,3$,
- $K_{33}/K_{11} = 1,27$.

Exemple 2

On prépare comme dans l'exemple 1, un mélange de cristaux liquides comprenant 70% en poids de I22 de formule (VIII) et 30% en poids de 5CCOd3Φ de formule (XVIII).

Les mesures effectuées comme dans l'exemple 1 pour déterminer la gamme de mésomorphisme du mélange, l'anisotropie optique $\Delta n$, l'anisotropie diélectrique $\Delta\varepsilon$ et la valeur du rapport $K_{33}/K_{11}$ ont conduit aux résultats suivants :

- gamme de mésomorphisme : −2 à 63°C,
- anisotropie optique : $\Delta n$=0,11,
- anisotropie diélectrique $\Delta\varepsilon$=−1,5,
- rapport $K_{33}/K_{11}$=1,32.

Exemple 3

On prépare comme dans l'exemple 1, un mélange comprenant 89% en poids du mélange eutectique de I35, I32 et I52, soit des composés de formules (IX), (X) et (XI), 9,7% en poids de CCN55 de formule (VII), et 1,3% en poids de 5HEN04 de formule (XV). Ce mélange présente les caractéristiques suivantes déterminées comme dans l'exemple 1.

- intervalle de mésomorphisme nématique : −32 à 97°C,
- anisotropie optique : $\Delta n$ = 0,138,
- anisotropie diélectrique : $\Delta\varepsilon$ : −1,
- $K_{33}/K_{11}$ = 1,3.

Exemple 4

On prépare comme dans l'exemple 1, un mélange de cristaux liquides ayant la composition suivante :

- 85,95% en poids du mélange eutectique de I35, I32 et I52, soit des composés de formule (IX), (X) et (XI),
- 8,65% en poids de BC055F de formule (XII),
- 2,2% en poids de CBC53 de formule (XIV), et
- 3,2% en poids de 5HEN04 de formule (XV).

Les caractéristiques de ce mélange de cristaux liquides sont les suivantes :

- intervalle de mésomorphisme nématique : −35 à +103°C,
- anisotropie optique : $\Delta n$=0,142,
- anisotropie diélectrique : $\Delta\varepsilon$=−1,
- $K_{33}/K_{11}$=1,2.

Exemple 5

Dans cet exemple, on prépare comme dans l'exemple 1, un mélange de cristaux liquides ayant la composition pondérale suivante :

- 82,8% du mélange eutectique de I35, I32 et I52, soit des composés de formule (IX), (X), et (XI),
- 12,2% du mélange eutectique de BC055F et de BC057F, soit des composés de formule (XII) et (XIII),
- 1,5% de CBC53 de formule (XIV), et
- 3,5% de 5 HEN04 de formule (XV).

Ce mélange présente les caractéristiques suivantes :

- intervalle de mésomorphisme nématique : −42° à 97°C,

– anisotropie optique : $\Delta n = 0{,}14$,
– anisotropie diélectrique : $\Delta\varepsilon = -1$,
– $K_{33}/K_{11}$ : 1,2.

Exemple 6

On prépare comme dans l'exemple 1, un mélange de cristaux liquides ayant la composition suivante :
– 12,2% en poids de I22 de formule (VIII),
– 76,4% en poids du mélange eutectique de I32, I35 et I52, soit des composés de formule (X), (IX) et (XI),
– 6,2% du mélange eutectique de BC055F et de BC057F, soit des composés de formule (XII) et (XIII),
– 2,5% en poids de CCN55 de formule (XVII), et
– 2,7% en poids de 5HEN04 de formule (XV).
Ce mélange liquide présente les caractéristiques suivantes :
– intervalle de méomorphisme nématique : –57°C à 93°C,
– anisotropie optique :$\Delta n = 0{,}145$,
– anisotropie diélectrique : $\Delta\varepsilon = -1$,
– $K_{33}/K_{11}$ : 1,37.

A titre de comparaison on donne dans le tableau 3 ci-après les caractéristiques physiques de quelques cristaux liquides utilisés dans les exemples ci-dessus de réalisation de l'invention.

Exemple 7

On prépare comme dans l'exemple 1 un mélange de cristaux liquides ayant la composition suivante :
– 78,10% en poids de composés de formule (I) constitués par le mélange eutectique de I35, I32 et I52 utilisé dans l'exemple 3,
– 3% en poids de composé de formule (IV) constitué par le 5 HEN04 de formule XV,
– 3,24% en poids de composé de formule V constitué par le CCN55 de formule XVII, et
– 15,65% en poids de composé de formule VII constitué par le BCH52FF de formule XIX.
Ce mélange liquide présente les caractéristiques suivantes :
– intervalle de mésomorphisme nématique : –53°C à 96,8°C,
– anisotropie optique $\Delta n$ : 0,137,
– anisotropie diélectrique $\varepsilon$ : –1,
– $K_{33}/K_{11} \geq 1{,}3$,

Exemple 8

On prépare comme dans l'exemple 1, un mélange de cristaux liquides ayant la composition suivante :
– 81,31% en poids de composés de formule I constitués par le mélange eutectique de I35, I32 et I52 utilisé dans l'exemple 3,
– 1,72% en poids de composé de formule V constitué par le CCN55 de formule XVII, et
– 16,97% en poids de composé de formule VII constitué par le BCH52FF de formule XIX.
Ce mélange liquide présente les caractéristiques suivantes :
– intervalle de mésomorphisme nématique : –51,56°C à 97,3°C,
– anisotropie optique $\Delta n$ : 0,138,
– anisotropie diélectrique $\Delta\varepsilon$ : –0,21,
– $K_{33}/K_{11} \geq 1{,}3$.

Exemple 9

On prépare comme dans l'exemple 1 un mélange de cristaux liquides ayant la composition suivante :
– 43,30% en poids de composé de formule (I) constitué par le I22 de formule VIII,
– 5,23% en poids de composé de formule (III) constitué par le CBC53 de formule XIV,
– 12,21% en poids de composé de formule V constitué par le CCN55 de formule XVII, et
– 39,26% en poids de composé de formule VII constitué par le BCH52FF de formule XIX.
Ce mélange liquide présente les caractéristiques suivantes :
– intervalle de mésomorphisme nématique : –20,25°C à 80, 7°C,
– anisotropie optique $\Delta n$ : 0,114,

- anisotropie diélectrique $\Delta\varepsilon$ : –0,76,
- $K_{33}/K_{11} \geq 1,3$.

Exemple 10

On prépare comme dans l'exemple 1 un mélange de cristaux liquides ayant la composition suivante :
- 41% de composé de formule I constitué par le I22 de formule VIII,
- 16,73% en poids de composé de formule II constitué par le BC055F de formule XII,
- 4,74% en poids de composé de formule III constitué par le CBC53 de formule XIV, et
- 37,53% en poids de composé de formule VII constitué par le BCH52FF de formule XIX.

Ce mélange liquide présente les caractéristiques suivantes :
- intervalle de mésomorphisme nématique : –22,17°C à 79,5°C,
- anisotropie optique $\Delta n$ : 0,117,
- anisotropie diélectrique $\Delta\varepsilon$ : –0,26,
- $K_{33}/K_{11}$ : $\geq 1,3$.

Exemple 11

On prépare comme dans l'exemple 1, un mélange de cristaux liquides ayant la composition suivante :
- 39,41% en poids de composé de formule I constitué par le I22 de formule VIII,
- 13,55% en poids de composé de formule II constitué par le BC055F de formule XII,
- 4,03% en poids de composé de formule III constitué par le CBC53 de formule XIV,
- 9,21% en poids de composé de formule V constitué par le CCN55 de formule XVII, et
- 33,80% en poids de composé de formule VII constitué par le BCH52FF de formule XIX.

Ce mélange liquide présente les caractéristiques suivantes :
- intervalle de mésomorphisme nématique : –25,29°C à 77,5°C,
- anisotropie optique $\Delta n$ : 0,113,
- anisotropie diélectrique $\Delta\varepsilon$ : –0,70,
- $K_{33}/K_{11} \geq 1,3$.

Les mélanges décrits dans les exemples précités présentent ainsi de bonnes propriétés pour une utilisation dans les dispositifs d'affichage utilisant l'effet de biréfringence contrôlé électriquement.

A titre d'exemple, on a décrit sur la figure annexée un dispositif d'affichage de ce type. Sur cette figure, on voit que le dispositif comprend deux parois isolantes et transparentes 1 et 3 et des joints d'étanchéité 5 et 7 délimitant une cavité interne 8 remplie de cristal liquide. Les deux parois isolantes sont revêtues intérieurement d'un système d'électrode à bandes croisées 9 et 11 permettant de déterminer les zones d'affichage. Un système de polariseurs croisés 13 et 15 est disposé de part et d'autre des parois 1 et 3 et un système de commande 17 permet d'appliquer une tension électrique sur les électrodes voulues. En fonctionnement, on applique à certaines des électrodes les tensions voulues pour déformer le cristal liquide dans les zones correspondant à ces électrodes et obtenir ainsi l'affichage.

Ce dispositif de commande des électrodes peut être du type de celui décrit dans le brevet européen EP-A-0 055 966 du C.E.A.

Dans le dispositif décrit ci-dessus, on peut utiliser comme cristal liquide les mélanges faisant l'objet de l'invention.

TABLEAU 3

| Cristal liquide | Intervalle de mésomorphisme nématique | anisotropie optique $\Delta n$ | anisotropie diélectrique $\Delta \epsilon$ | $K_{33}/K_{11}$ |
|---|---|---|---|---|
| 1-(alkylcyclohexyl) 2-(alkylfluorobiphényl) éthane I22 | -10 à 102°C | 0,149 | -0,05 | 1,2 |
| alkylbicyclooctane carboxylates d'alkyl fluorophényl BC055F | 26,3 à 64°C | 0,06 | -0,72 | 1,35 |
| bicyclohexyl carbonitrile dialkyle ou alkylène CCN47 | 30,8 à 58,9°C | 0,03 | -7 | 2,0 |

**Revendications**

1. Mélange de cristaux liquides nématiques, caractérisé en ce qu'il est constitué par :
– au moins un 1-(alkylcyclohexyl-2-(alkylfluorobiphénylyl) éthane de formule :

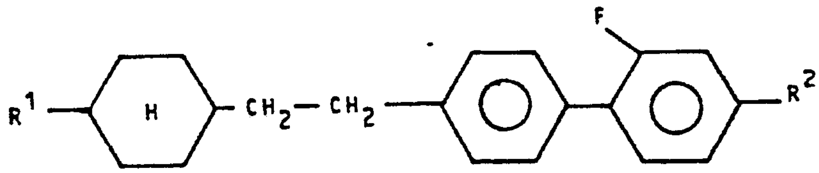
(I)

dans laquelle $R^1$ et $R^2$ qui peuvent être identiques ou différents, sont des radicaux alkyle de 1 à 7 atomes de carbone, et
– au moins un composé choisi parmi :
a) les alkyl bicyclooctane carboxylates d'alkyl fluorophényle de formule :

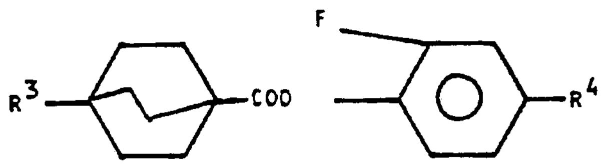
(II)

dans laquelle $R^3$ et $R^4$ qui peuvent être identiques ou différents, sont des radicaux alkyle de 1 à 7 atomes de carbone,
b) les biphénylbicyclohexyldialkyle de formule :

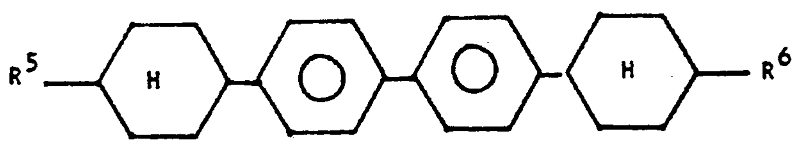
(III)

dans laquelle $R^5$ et $R^6$ sont des radicaux alkyle de 1 à 7 atomes de carbone,
c) les alkylcyclohexylcarboxylates de dicyanoalcoxyphényle répondant à la formule :

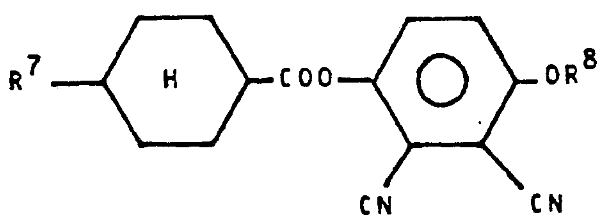
(IV)

dans laquelle $R^7$ et $R^8$ qui peuvent être identiques ou différents, sont des radicaux alkyle de 1 à 7 atomes de carbone,
d) les bicyclohexylcarbonitriledialkyle ou alkylalkylène répondant à la formule :

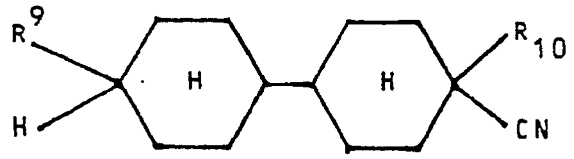

(V)

dans laquelle $R^9$ et $R^{10}$ qui peuvent être identiques ou différents, sont des radicaux alkyle ou alkylène de 1 à 7 atomes de carbone,

e) les alkylcyclohexylbenzoates de dicyanoalcoxyphényle de formule :

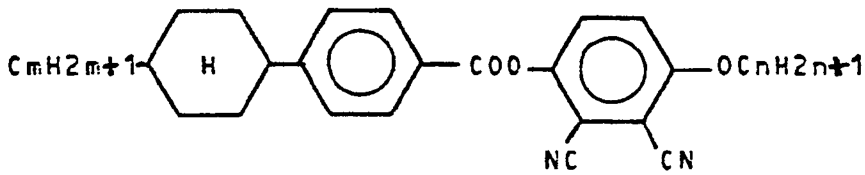

(VI)

dans laquelle n et m sont des nombres entiers allant de 1 à 7, et

f) les cyclohexylbiphényle de formule :

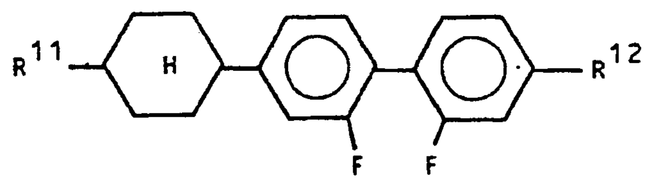

(VII)

dans laquelle $R^{11}$ est un radical alkyle de 1 à 12 atomes de carbone et $R^{12}$ est un radical alkyle ou alkoxy de 1 à 12 atomes de carbone ;

ledit mélange comprenant en poids :

– de 30 à 90% au total du ou des 1-(alkylcyclohexyl)2-(alkylfluorobiphénylyl) éthane de formule (I),

– de 0 à 20% au total du ou des alkylbicyclooctane carboxylates d'alkylfluorophényle de formule (II),

– de 0 à 12% au total du ou des biphénylbicyclohexyldialkyle de formule (III),

– de 0 à 12% au total du ou des alkylcyclohexylcarboxylates de dicyanoalcoxyphényle de formule (IV),

– de 0 à 40% au total du ou des bicyclohexylcarbonitrile dialkyle ou alkylalkylène de formule (V),

– de 0 à 12% au total du ou des alkylcyclohexylbenzoates de dicyanoalcoxyphényle de formule (VI),

– de 0 à 45% au total du ou des cyclohexylbiphényle de formule (VII) ; à condition que la teneur totale dudit mélange en alkylcyclohexyl carboxylate(s) de dicyanoalcoxyphényle de formule (IV) et en alkylcyclohexylbenzoate(s) de dicyanoalcoxyphényle de formule (VI) ne dépasse pas 12% en poids et que ledit mélange ait une anisotropie optique $\Delta n \geq 0{,}11$ et un rapport de la constante élastique de flexion $K_{33}$ à la constante élastique d'éventail $K_{11}$ : $K_{33}/K_{11} \geq 1{,}2$.

2. Mélange de cristaux liquides selon la revendication 1, caractérisé en ce que le 1-(alkylcyclohexyl)-2-(alkylfluorobiphénylyl) éthane est choisi parmi le 1-(trans-4-n-éthyl-cyclohexyl)-2-[2'-fluoro-4'-(2-éthyl)-4-biphénylyl] éthane, le 1-(trans-4-n-propylcyclohexyl)-2- [2'-fluoro-4'-(2-pentyl)-4-biphénylyl] éthane, le 1-(trans-4-n-propylcyclohexyl)-2-[2'-fluoro-4'-(2-éthyl)-4-biphénylyl] éthane et le 1-(trans-4-n-pentylcyclohexyl)-2-[2'-fluoro-4'-(2-éthyl)-4-biphénylyl] éthane.

3. Mélange de cristaux liquides selon l'une quelconque des revendications 1 et 2, caractérisé en ce que l'alkylbicyclooctane carboxylate d'alkylfluorophényle est le 4-n-pentylbicyclooctane carboxylate de 2-fluoro-4-n-pentylphényle ou le 4-n-pentylbicyclooctane carboxylate de 2-fluoro-4-n-heptylphényle.

4. Mélange de cristaux liquides selon l'une quelconque des revendications 1 à 3, caractérisé en ce que le biphénylbicyclohexyldialkyle est le 4-(trans-4-n-pentylcyclohexyl)-4'-(trans-4-n-propylcyclohexyl) biphényle.

5. Mélange de cristaux liquides selon l'une quelconque des revendications 1 à 4, caractérisé en ce que l'alkylcyclohexylcarboxylate de dicyanoalcoxyphényle est le trans-4-n-pentylcyclohexyl-1-carboxylate de 4-n-butoxy-2,3 dicyanophényle.

6. Mélange de cristaux liquides selon l'une quelconque des revendications 1 à 5, caractérisé en ce que le bicyclohexylcarbonitrile dialkyle ou alkylalkylène est le 4α n-heptyl, 4'α n-butyl-1α, 1'α bicyclohexyl-4 β-carbonitrile, le 4α, 4'α di-n-pentyl-1α, 1'α bicyclohexyl-4 β-carbonitrile ou le 4α n-pentyl, 4'α(propényl-2)-1α, 1'α bicyclohexyl-4 β-carbonitrile.

7. Mélange de cristaux liquides selon l'une quelconque des revendications 1 à 6, caractérisé en ce que l'akylcyclohexylbenzoate de dicyanoalcoxyphényle est le pentylcyclohexylbenzoate de dicyanobutoxyphényle ou le pentylcyclohexylbenzoate de dicyanopentoxyphényle.

8. Mélange de cristaux liquides selon l'une quelconque des revendications 1 à 7, caractérisé en ce que le cyclohexylbiphényle répond à la formule :

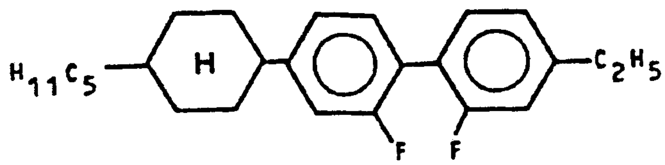 (XIX)

9. Mélange de cristaux liquides selon l'une quelconque des revendications 1 à 6, caractérisé en ce qu'il comprend en poids :

- de 60 à 90% au total du ou des 1-(alkylcyclohexyl)-2-(alkylfluorobiphénylyl) éthane de formule (I),
- de 0 à 15% au total du ou des alkylbicyclooctanecarboxylates d'alkylfluorophényle de formule (II),
- de 0 à 12% au total du ou des biphénylbicyclohexyldialkyle de formule (III),
- de 0 à 12% au total du ou des alkylcyclohexylcarboxylates de dicyanoalkoxyphényle de formule (IV), et
- de 0 à 40% au total du ou des bicyclohexylcarbonitrile dialkyle ou alkylalkylène de formule (V).

10. Mélange de cristaux liquides selon l'une quelconque des revendications 1, 2 et 6, caractérisé en ce qu'il comprend en poids de 60 à 90% au total du ou des 1-(alkylcyclohexyl)-2-(alkylfluorobiphénylyl) éthane de formule (I) et de 10 à 40% au total du ou des bicyclohexyl carbonitrile dialkyle ou alkylalkylène de formule (V).

11. Mélange de cristaux liquides selon la revendication 9, caractérisé en ce qu'il comprend :

- 89% en poids du mélange eutectique de 1-(trans-4-n-propylcyclohexyl)-2- [2'-fluoro-4'-(2-pentyl)-4-biphénylyl] éthane, de 1-(trans-4-n-propylcyclohexyl)-2-[2'-fluoro-4'(2-éthyl)-4-biphényly] éthane et de 1-(trans-4-n-pentylcyclohexyl)-2-[2'-fluoro-4'-(2-éthyl)-4-biphénylyl] éthane,
- 9,7% de 4α, 4'α di-n-pentyl-1α, 1'α bicyclohexyl-4β- carbonitrile, et
- 1,3% en poids de trans-4-n-pentylcyclohexyl 1-carboxylate de 4-n-butoxy-2,3-dicyanophényle.

12. Mélange de cristaux liquides selon la revendication 9, caractérisé en ce que ledit mélange comprend en poids :

- 82 à 86% en poids au total d'un ou plusieurs 1-(alkylcyclohexyl)-2-(alkylfluorobiphénylyl) éthane de formule (I),
- de 5 à 12,7% au total du ou des alkylbicyclooctanecarboxylates d'alkylfluorophényle de formule (II),
- 1,5 à 3% au total du ou des biphénylbicyclohexyldialkyle de formule (III), et
- 3 à 4% au total du ou des alkylcyclohexylcarboxylates de dicyanoalkoxyphényle de formule (IV).

13. Mélange de cristaux liquides selon la revendication 9, caractérisé en ce que ledit mélange comprend :

- 12,2% de 1-(trans-4-n-éthylcyclohexyl)-2-[2'fluoro-4'-(2-éthyl-4-biphénylyl] éthane,
- 76,4% du mélange eutectique de 1-(trans-4-n-propylcyclohexyl)-2-[2'-fluoro-4'-(2-pentyl)-4-biphénylyl] éthane, de 1-(trans-4-n-propylcyclohexyl)-2-[2'-fluoro-4'-(2-éthyl)-4-biphénylyl] éthane et de 1-(trans-4-n-pentylcyclohexyl)-2-[2'-fluoro-4'-(2-éthyl)-4-biphénylyl] éthane,
- 6,2% en poids du mélange eutectique de 4-n-pentylbicyclooctanecarboxylate de 2-fluoro-4-n-pentylphényle et de 4-n-pentylbicyclooctanecarboxylate de 2-fluoro-4-n-heptylphényle,
- 2,5% en poids de 4α, 4'α di-n-pentyl-1α, 1'α bicyclohexyl-4β-carbonitrile, et
- 2,7% en poids de trans-4-n-pentylcyclohexyl-1-carboxylate de 4-n-butoxy-2,3-dicyanophényle.

14. Mélange de cristaux liquides selon l'une quelconque des revendications 1 et 8, caractérisé en ce qu'il comprend en poids :

- de 30 à 85% au total du ou des 1-(alkylcyclohexyl-2-(alkylfluorobiphénylyl) éthane de formule (I),
- de 0 à 20% au total du ou des alkylbicyclooctane carboxylates d'alkylfluorophényle de formule (II),

– de 0 à 12% au total du ou des biphénylbicyclohexyldialkyle de formule III,
– de 0 à 12% au total du ou des alkylcyclohexyl carboxylates de dicyanoalcoxyphényle de formule (IV),
– de 0 à 40% au total du ou des bicyclohexylcarbonitrile dialkyle ou alkylalkylène de formule (V),
– de 0 à 12% au total du ou des alkylcyclohexylbenzoates de dicyanoalcoxyphényle de formule (VI), et
– de 15 à 40% au total du ou des cyclohexylbiphényle de formule VII.

15. Mélange de cristaux liquides selon la revendication 14, caractérisé en ce qu'il comprend en poids:
– de 75 à 85% au total du ou des 1-(alkylcyclohexyl-2-(alkylfluorobiphénylyl) éthane de formule (I),
– de 14 à 18% au total du ou des cyclohexylbiphényle de formule (VII), et
– de 1 à 7% au total du ou des alkylcyclohexylcarboxylates de dicyanoalcoxyphényle de formule (IV) et/ou des bicyclohexylcarbonitrile dialkyle ou alkylalkylène de formule (V).

16. Mélange de cristaux liquides selon la revendication 14, caractérisé ce qu'il comprend en poids :
– de 35 à 45% au total du ou des 1-(alkylcyclohexyl-2-(alkylfluorobiphénylyl) éthane de formule (I),
– de 30 à 40% au total du ou des cyclohexylbiphényle de formule (VII), et
– de 15 à 30% au total d'un ou plusieurs composés choisis parmi les alkylbicyclooctanecarboxylates d'alkylfluorophényle de formule (II), les biphénylbicyclohexyl dialkyle de formule (III), les alkylcyclohexylcarboxylates de dicyanoalkoxyphényle de formule (IV), les bicyclohexylcarbonitrile dialkyle ou alkylalkylène de formule (V) et les alkylcyclohexylbenzoates de dicyanoalkoxyphényle de formule (VI).

17. Dispositif à cristal liquide mettant en jeu l'effet de biréfringence contrôlée électriquement, caractérisé en ce qu'il comprend un mélange de cristaux liquides obtenu selon l'une quelconque des revendications 1 à 16.

## Ansprüche

1. Mischung von nematischen Flüssigkristallen, dadurch gekennzeichnet, daß sie besteht aus
– mindestens einem 1-(Alkylcyclohexyl)-2-(alkylfluorobiphenylyl)ethan der Formel

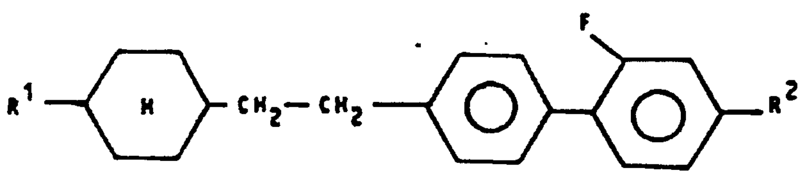

(I)

worin $R^1$ und $R^2$, die identisch oder verschieden sein können, Alkylreste mit 1 bis 7 Kohlenstoffatomen darstellen, und
– mindestens einer Verbindung, die ausgewählt wird aus
(a) den Alkylfluorophenyl-alkylbicyclooctancarboxylaten der Formel

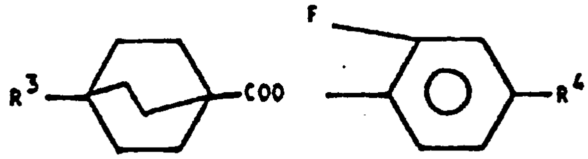

(II)

worin $R^3$ und $R^4$, die identisch oder verschieden sein können, Alkylreste mit 1 bis 7 Kohlenstoffatomen

darstellen,
(b) den Biphenylbicyclohexyldialkylen der Formel

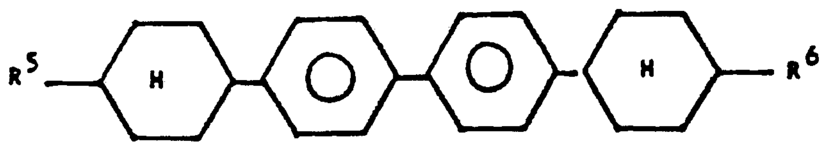

(III)

worin $R^5$ und $R^6$ Alkylreste mit 1 bis 7 Kohlenstoffatomen darstellen,
(c) den Dicyanoalkoxyphenyl-alkylcyclohexylcarboxylaten der Formel

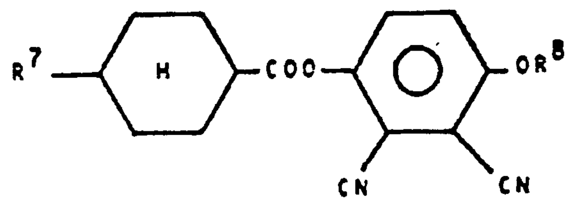

(IV)

worin $R^7$ und $R^8$, die identisch oder verschieden sein können, Alkylreste mit 1 bis 7 Kohlenstoffatomen darstellen,
(d) den Dialkyl- oder Alkylalkylen-bicyclohexylcarbonitrilen der Formel

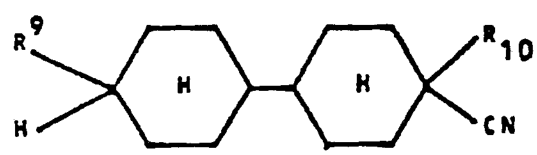

(V)

worin $R^9$ und $R^{10}$, die identisch oder verschieden sein können, Alkyl- oder Alkylenreste mit 1 bis 7 Kohlenstoffatomen darstellen
(e) den Dicyanoalkoxyphenyl-alkylcyclohexylbenzoaten der Formel

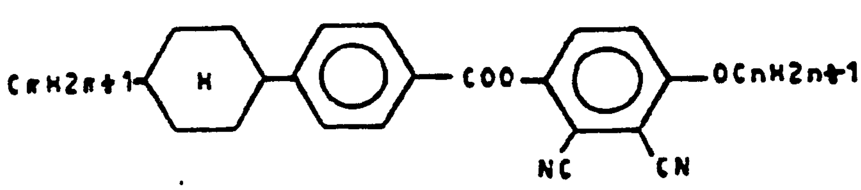

(VI)

worin n und m ganze Zahlen Von 1 bis 7 darstellen, und
(f) den Cyclohexylbiphenylen der Formel

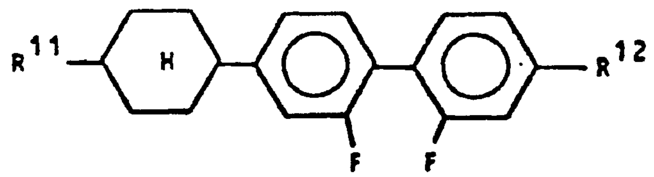

(VII)

worin $R^{11}$ einen Alkylrest mit 1 bis 12 Kohlenstoffatomen und $R^{12}$ einen Alkyl- oder Alkoxyrest mit 1 bis 12 Kohlenstoffatomen darstellt,
wobei die Mischung in Gew.-% enthält zu
– insgesamt 30 bis 90% ein oder mehrere 1-(Alkylcyclohexyl)-2-(alkylfluorobiphenylyl)ethane der Formel (I),
– insgesamt 0 bis 20% ein oder mehrere Alkylfluorophenylalkylbicclooctancarboxylate der Formel (II),
– insgesamt 0 bis 12% ein oder mehrere Biphenylbicyclohexyldialkyle der Formel (III),
– insgesamt 0 bis 12% ein oder mehrere Dicyanoalkoxyphenylalkylcyclohexylcarboxylate der Formel (IV),
– insgesamt 0 bis 40% ein oder mehrere Dialkyl- oder Alkylalkylen-bicyclohexylcarbonitrile der Formel (V),
– insgesamt 0 bis 12% ein oder mehrere Dicyanoalkoxyphenylalkylcyclohexylbenzoate der Formel
– insgesamt 0 bis 45% ein oder mehrere Cyclohexylbiphenyle der Formel (VII) ;
mit der Maßgabe, daß der Gesamtgehalt der Mischung an Dicyanoalkoxyphenyl-alkylcyclohexylcarboxylat(en) der Formel (IV) und an Dicyanoalkoxyphenyl-alkylcyclohexylbenzoat(en) der Formel (VI) 12 Gew.-% nitht übersteigt und die Misthung eine optische Anisotropie $\Delta n \geq 0{,}11$ und ein Verhältnis zwischen der Biegeelastizitätskonstanten $K_{33}$ und der Fächer-Elastizitätskonstanten $K_{11}$ von $K_{33}/K_{11} \geq 1{,}2$ aufweist.

2. Mischung von Flüssigkristallen nach Anspruch 1, dadurch gekennzeichnet, daß das 1-(Alkylcyclohexyl)-2-(alkylfluorobiphenylyl) ethan ausgewählt wird aus 1-(trans-4-n-Ethylcyclohexyl)-2- [2′-fluoro-4′-(2-ethyl)-4-biphenylyl] ethan, 1-(trans-4-n-Propylcyclohexyl)-2-[2′-fluoro-4′-(2-pentyl)4-biphenylyl] ethan, 1-(trans-4-n-Propylcyclohexyl)-2-[2′fluoro-4′-(2-ethyl)-4-biphenylyl] ethan und 1-(trans-4-n-Pentylcyclohexyl)-2- [2′-fluoro-4′-(2-ethyl)-4-biphenylyl] ethan.

3. Mischung von Flüssigkristallen nach einem der Ansprüche 1 und 2, dadurch gekennzeichnet, daß es sich bei dem Alkylfluorophenyl-alkylbicyclooctancarboxylat handelt um das 2-Fluoro-4-n-pentylphenyl-4-n-pentylbicyclooctancarboxylat oder das 2-Fluoro-4-n-heptylphenyl-4-n-pentylbicyclooctancarboxylat.

4. Mischung von Flüssigkristallen nach einem der Ansprüche 1 bis 3, dadurch gekennzeichnet, daß es sich bei dem Biphenylbicyclohexyldialkyl handelt um das 4-(trans-4-n-Pentylcyclohexyl)-4′-(trans-4-n-propylcyclohexyl)biphenyl.

5. Mischung von Flüssigkristallen nach einem der Ansprüche 1 bis 4, dadurch gekennzeichnet, daß essich bei dem Dicyanoalkoxyphenyl-alkylcyclohexylcarboxylat handelt um das 4-n-Butoxy-2,3-dicyanophenyl-trans-4-n-pentylcyclohexyl-1-carboxylat.

6. Mischung von Flüssigkristallen nach einem der Ansprüche 1 bis 4, dadurch gekennzeichnet, daß es sich bei dem Dialkyloder Alkylalkylen-bicyclohexylcarbonitril handelt um das 4α-n-Heptyl, 4′α-n-butyl-1α,1′α-bicyclohexyl-4β-carbonitril, das 4α,4α -Di-n-pentyl-1α,1α -bicyclohexyl-4β-carbonitril oder das 4α-n-Pentyl, 4′α-(propenyl-2)-1α,1α -bicyclohexyl-4β-carbonitril.

7. Mischung von Flüssigkristallen nach einem der Ansprüche 1 bis 6, dadurch gekennzeichnet, daß es sich bei dem Dicyanoalkoxyphenyl-alkyltyclohexylbenzoat um das Dicyanobutoxyphenyl-pentylcyclohexylbenzoat oder das Dicyanopentoxyphenylpentylcyclohexylbenzoat handelt.

8. Mischung von Flüssigkristallen nach einem der Ansprüche 1 bis 7, dadurch gekennzeichnet, daß das Cyclohexylbiphenyl der Formel entspricht :

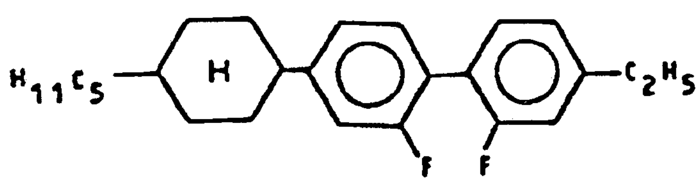

(XIX)

9. Mischung von Flüssigkristallen nach einem der Ansprüche 1 bis 6, dadurch gekennzeichnet, daß sie in Gew.-% enthält zu

- insgesamt 60 bis 90 % ein oder mehrere 1-(Alkyltyclohexyl)-2(alkylfluorobiphenylyl)ethane der Formel (I),
- insgesamt 0 bis 15% ein oder mehrere Alkylfluorophenyl-alkylbicyclooctancarboxylate der Formel 11,
- insgesamt 0 bis 12% ein oder mehrere Biphenylbitytlohexyl dialkyle der Formel (III),
- insgesamt 0 bis 12% ein oder mehrere Dicyanoalkoxyphenyl-alkylcyclohexylcarboxylate der Formel (IV) und
- insgesamt 0 bis 40% ein oder mehrere Dialkyl- oder Alkylen-bicyclohexylcarbonitrile der Formel (V).

10. Mischung von Flüssigkristallen nach einem der Ansprüche 1, 2 und 6, dadurch gekennzeichnet, daß sie in Gew.-% enthält zu

- insgesamt 60 bis 90% ein oder mehrere 1-(Alkyltyclohexyl)-2-(alkylfluorobiphenylyl)ethane der Formel (I) und
- insgesamt 10 bis 40% ein oder mehrere Dialkyl- oder Alkylalkylen-bicyclohexylcarbonitrile der Formel (V).

11. Mischung von Flüssigkristallen nach Anspruch 9, dadurch gekennzeichnet, daß sie enthält zu

- 89 Gew.-% das eutektische Gemisch von 1-(trans-4-n-Propylcyclohexyl)-2-[2′-fluoro-4′-(2-pentyl)-4-biphenylyl] ethan, 1-(trans-4-n-Propylcyclohexyl)-2-[2′-fluoro-4′-(2-ethyl)-4-biphenylyl] ethan und 1-(trans-4-n-Pentylcyclohe-xyl)-2-[2′-fluoro-4′-(2-ethyl)-4-biphenylyl] ethan,
- 9,7 Gew.-% 4α,4′α -Di-n-pentyl-1α,1′α bicyclohexyl-4β-carbonitril und
- 1,3 Gew.-% 4-n-Butoxy-2,3-dicyanophenyl-trans-4-n-pentylcyclohexyl-1-carboxylat.

12. Mischung von Flüssigkristallen nach Anspruch 9, dadurch gekennzeichnet, daß die Mischung in Gew.-% enthält zu

- insgesamt 82 bis 86% ein oder mehrere 1-(Alkylcyclohexyl) 2-(alkylfluorobiphenylyl)ethane der Formel 1,
- insgesamt 5 bis 12,7% ein oder mehrere Alkylfluorophenyl-alkylbicyclooctancarboxylate der Formel (II),
- insgesamt 1,5 bis 3% ein oder mehrere Biphenylbicyclohexyldialkyle der Formel (III) und
- insgesamt 3 bis 4 % ein oder mehrere Dicyanoalkoxyphenyl-alkylcyclohexylcarboxylate der Formel (IV).

13. Mischung von Flüssigkristallen nach Anspruch 9, dadurch gekennzeichnet, daß sie enthält zu

- 12,2 Gew.-% 1-(trans-4-n-Ethylcyclohexyl)-2-[2′-fluoro-4′-(2 -ethyl-4-biphenylyl] ethan,
- 76,4 Gew.-% des eutektischen Gemisches von 1-(trans-4-n-propylcyclohexyl)-2-[2′-fluoro-4′-(2-pentyl)-4-biphenylyl] ethan, 1-(trans-4-n-Propylcyclohexyl)-2- [2′-fluoro-4′-(2-ethyl)-4-biphenylyl] ethan und 1-(trans-4-n-Pentylcyclohexyl)-2-[2′-fluoro-4′-(2-ethyl)-4-biphenylyl] ethan,
- 6,2 Gew.-% das eutektische Gemisch von 2-Fluoro-4-n-pentylphenyl-4-n-pentylbicyclooctancarboxylat und 2-Fluoro-4-n-heptylphenyl-4-n-pentylbicyclooctancarboxylat,
- 2,5 Gew.-% 4α,4′α -Di-n-pentyl-1α,1′α -bicyclohexyl-4β-carbonitril und
- 2,7 Gew.-% 4-n-Butoxy-2,3-dicyanophenyl-trans-4-n-pentylcyclohexyl-1-carboxylat.

14. Mischung von Flüssigkristallen nach einem der Ansprüche 1 und 8, dadurch gekennzeichnet, daß sie in Gew.-% enthält zu

- insgesamt 30 bis 85% ein oder mehrere 1-(Alkylcyclohexyl-2-(alkylfluorobiphenylyl)ethane der Formel (I),
- insgesamt 0 bis 20% ein oder mehrere Alkylfluorophenyl-alkylbicyclooctantarboxylate der Formel (II),
- insgesamt 0 bis 12% ein oder mehrere Biphenylbicyclohexyldialkyle der Formel (III),
- insgesamt 0 bis 12% ein oder mehrere Dicyanoalkoxyphenyl-alkylcyclohexylcarboxylate der Formel (IV),
- insgesamt 0 bis 40% ein oder mehrere Dialkyl- oder Alkylalkylen-bicyclohexylcarbonitrile der Formel (V),
- insgesamt 0 bis 12% ein oder mehrere Dicyanoalkoxyphenyl-alkylcytlohexylbenzoate der Formel (VI) und
- insgesamt 15 bis 40% ein oder mehrere Cyclohexylbiphenyle der Formel (VII).

15. Mischung von Flüssigkristallen nach Anspruch 14, dadurch gekennzeichnet, daß sie in Gew.-% enthält zu

- insgesamt 75 bis 85% ein oder mehrere 1-(Alkylcyclohexyl)-2-(alkylfluorobiphenylyl)ethane der Formel (I),
- insgesamt 14 bis 18% ein oder mehrer Cycloexylbiphenyle der Formel (VII) und
- insgesamt 1 bis 7% ein oder mehrere Dicyanoalkoxyphenyl-alkylcyclohexylcarboxylate der Formel

(IV) und/oder Dialkyl- oder Alkylalkylen-bicyclohexylcarbonitrile der Formel (V).

16. Mischung von Flüssigkristallen nach Anspruch 14, dadurch gekennzeichnet, daβ sie in Gew.-% enthält zu

- insgesamt 35 bis 45% ein oder mehrere 1-(Alkylcyclohexyl)-2-(alkylfluorobiphenylyl)ethane der Formel (I),
- insgesamt 30 bis 40% ein oder mehrere Cyclohexylbiphenyle der Formel (VII) und
- insgesamt 15 bis 30% ein oder mehrere Verbindungen, die ausgewählt werden aus den Alkylfluorophenyl-alkybicyclooctancarboxylaten der Formel (II), den Biphenylbicyclohexyldialkylen der Formel (III), den Dicyanoalkoxyphenyl-alkylcyclohexylcarboxylaten der Formel (IV), den Dialkyl- oder Alkylalkylen-bicyclohexylcarbonitrilen der Formel (V) und den Dicyanoalkoxyphenyl-alkylcyclohexylbenzoaten der Formel (VI).

17. Flüssigkristall-Vorrichtung, die den elektrisch kontrollierten Doppelbrechungseffekt ausnutzt, dadurch gekennzeichnet, daß sie eine Mischung von Flüssigkristallen nach einem der Ansprüche 1 bis 16 enthält.

## Claims

1. Mixture of nematic liquid crystals, characterized in that it consists of :

- at least one 1-(alkylcyclohexyl-2-(alkylfluorobiphenylyl)ethane of formula :

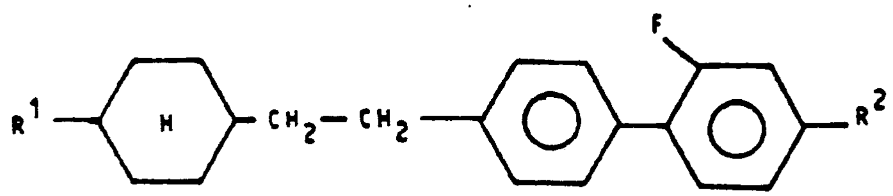

(I)

in which $R^1$ and $R^2$, which may be identical or different, are alkyl radicals of 1 to 7 carbon atoms, and

- at least one compound chosen from :

a) alkylfluorophenyl alkylbicyclooctanecarboxylates of formula :

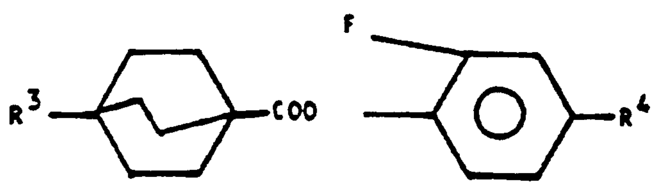

(II)

in which R3 and R4, which may be identical or different, are alkyl radicals of 1 to 7 carbon atoms.

b) biphenylbicyclohexyldialkyls of formula :

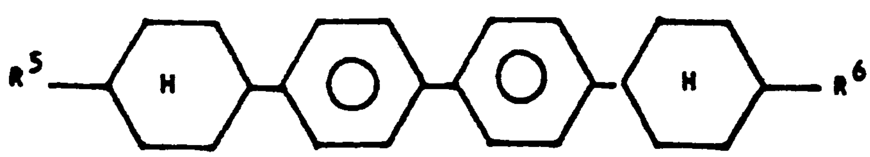

(III)

in which $R^5$ and $R^6$ are alkyl radicals of 1 to 7 carbon atoms,

c) dicyanoalkoxyphenyl alkylcyclohexylcarboxylates corresponding to the formula :

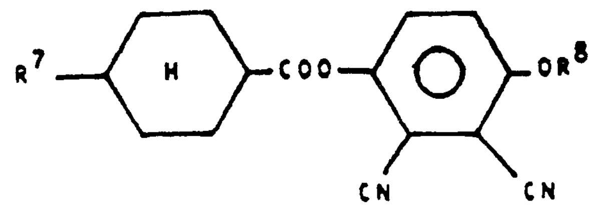

(IV)

in which $R^7$ and $R^8$, which may be identical or different, are alkyl radical of 1 to 7 carbon atoms,

d) bicyclohexylcarbonitriledialkyls or alkylalkylenes corresponding to the formula :

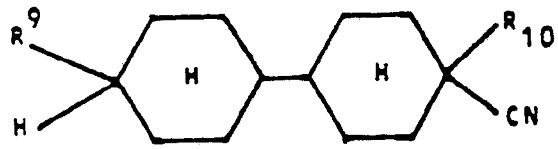

(V)

in which $R^9$ and $R^{10}$, which may be identical or different, are alkyl or alkylene radical of 1 to 7 carbon atoms,

e) dicyanoalkoxyphenyl alkylcyclohexylbenzoates of formula :

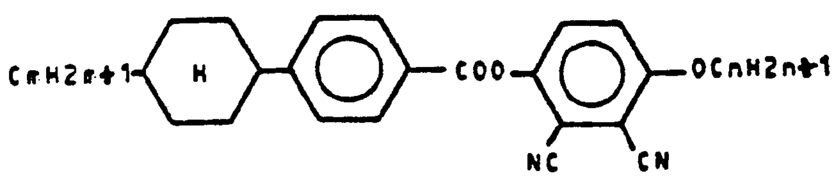

(VI)

in which n and m are integers ranging from 1 to 7 and

f) cyclohexylbiphenyls of formula :

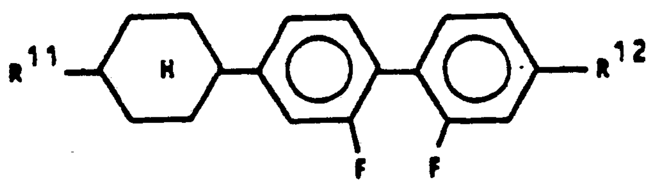

(VII)

in which $R^{11}$ is an alkyl radical of 1 to 12 carbon atoms and $R^{12}$ is an alkyl or alkoxy radical of 1 to 12 carbon atoms ;

the said mixture comprising by weight :

- from 30 to 90% in all of the 1-(alkylcyclohexyl)-2-(alkylfluorobiphenylyl)ethane(s) of formula (I),
- from 0 to 20% in all of the alkylfluorophenyl alkylbicyclooctanecarboxylate(s) of formula (II),
- from 0 to 12% in all of the biphenylcyclohexyldialkyl(s) of formula (III),
- from 0 to 12% in all of the dicyanoalkoxyphenyl alkylcyclohexylcarboxylate (s) of formula (IV),
- from 0 to 40% in all of the bicyclohexylcarbonitriledialkyl (s) or alkylalkylene (s) of formula (V),
- from 0 to 12% in all of the dicyanoalkoxyphenyl alkylcyclohexylbenzoate (s) of formula (VI),
- from 0 to 45% in all of the cyclohexylbiphenyl(s) of formula (VII) ; on condition that the total content of dicyanoalkoxyphenyl alkylcyclohexylcarboxylate(s) of formula (IV) and of dicyanoalkoxyphenyl alkylcyclohexylbenzoate(s) of formula (VI) in the said mixture does not exceed 12% by weight and that the said mixture has an optical anisotropy $\Delta n \geq 0.11$ and a ratio of the flexural elastic constant $K_{33}$ to the fan elastic constant $K_{11}$ : $K_{33}/K_{11} \geq 1.2$.

2. Mixture of liquid crystals according to Claim 1, characterized in that the 1-(alkylcyclohexyl)-2-(alkylfluorobiphenylyl)ethane is chosen from 1-(trans-4-n-ethylcyclohexyl)-2-[2'-fluoro-4'-(2-ethyl)-4-biphenylyl] ethane, 1-(trans-4-n-propylcyclohexyl)-2-[2'-fluoro-4'-(2-pentyl)-2-biphenylyl] ethane,

1-(trans-4-n-propylcyclohexyl)-2-[2'-fluoro-4'-(2-ethyl)-4-biphenylyl] ethane and 1-(trans-4-n-pentylcyclohexyl)-2-[2'-fluoro-4'-(2-ethyl)-4-biphenylyl] ethane.

3. Mixture of liquid crystals according to either of Claims 1 and 2, characterized in that the alkylfluorophenyl alkylbicyclooctanecarboxylate is 2-fluoro-4-n-pentylphenyl 4-n-pentylbicyclooctanecarboxylate or 2-fluoro-4-n-heptylphenyl 4-n-pentylbicyclooctanecarboxylate.

4. Mixture of liquid crystals according to any one of Claims 1 to 3, characterized in that the biphenylbicyclohexyldialkyl is 4-(trans-4-n-pentylcyclohexyl)-4'-(trans-4-n-propylcyclohexyl) biphhenyl.

5. Mixture of liquid crystals according to any one of Claims 1 to 4, characterized in that the dicyanoalkoxyphenyl alkylcyclohexylcarboxylate is 4-n-butoxy-2,3-dicyanophenyl trans-4-n-pentylcyclohexyl-1-carboxylate.

6. Mixture of liquid crystals according to any one of Claims 1 to 5 characterized in that the bicyclohexylcarbonitriledialkyl or alkylalkylene is 4α-n-heptyl,4'α-n-butyl-1α,1'α-bicyclohexyl-4β-carbonitrile 4α,4'α-di-n-pentyl-1α,1'α-bicyclohexyl-4β-carbonitrile or 4α-n-pentyl, 4'α(2-propenyl)-1α,1'α-bicyclohexyl-4β-carbonitrile.

7. Mixture of liquid crystals according to any one of Claims 1 to 6, characterized in that the dicyanoalkoxyphenyl alkylcyclohexylbenzoate is dicyanobutoxyphenyl pentylcyclohexylbenzoate or dicyanopentoxyphenyl pentylcyclohexylbenzoate.

8. Mixture of liquid crystals according to any one of Claims 1 to 7 characterized in that the cyclohexylbiphenyl corresponds to the formula :

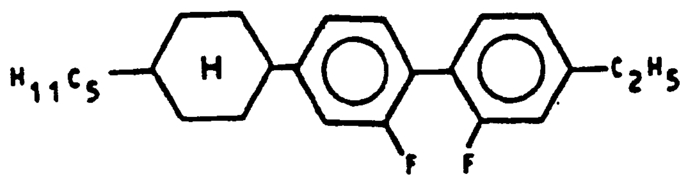

(XIX)

9. Mixture of liquid crystals according to any one of Claims 1 to 6, characterized in that it comprises by weight :

- from 60 to 90% in all of the 1-(alkylcyclohexyl)-2-(alkylfluorobiphenylyl)ethane (s) of formula (I),
- from 0 to 15% in all of the alkylfluorophenyl alkylbicyclooctanecarboxylate (s) of formula (II),
- from 0 to 12% in all of the biphenylbicyclohexyldialkyl(s) of formula (III),
- from 0 to 12% in all of the dicyanoalkoxyphenyl alkylcyclohexylkcarboxylate (s) of formula (IV), and
- from 0 to 40% in all of the bicyclohexylcarbonitriledialkyl (s) or alkylalkylene(s) of formula (V).

10. Mixture of liquid crystals according to any one of Claims 1, 2 and 6, characterized in that it comprises by weight from 60 to 90% in all of the 1-(alkylcyclohexyl)-2-(alkyl fluorobiphenylyl) ethane (s) of formula (I) and from 10 to 40% in all of the bicyclohexylcarbonitriledialkyl (s) or alkylalkylene (s) of formula (V).

11. Mixture of liquid crystals according to Claim 9, characterized in that it comprises :

- 89% by weight of the eutectic mixture of 1-(trans-4-n-propylcyclohexyl)-2-[2'-fluoro-4'-(2-pentyl)-4-biphenylyl] ethane, of 1-(trans-4-n-propylcyclohexyl)-2-[2'-fluoro-4'-(2-ethyl)-4-biphenylyl] ethane and of 1-(trans-4-n-pentylcyclohexyl)-2-[2'-fluoro-4'-(2-ethyl)-4-biphenylyl] ethane,
- 9.7% of 4α,4'α-di-n-pentyl-1α,1'α-bicyclohexyl-4β-carbonitrile, and
- 1.3% by weight of 4-n-butoxy-2,3-dicyanophenyl trans-4-n-pentylcyclohexyl-1-carboxylate.

12. Mixture of liquid crystals according to Claim 9, characterized in that the said mixture comprises by weight :

- 82 to 86% by weight in all of one or more 1-(alkylcyclohexyl)-2-((alkylfluorobiphenylyl) ethane(s) of formula (I),
- from 5 to 12.7% in all of the alkylfluorophenyl alkylbicyclooctanecarboxylates of formula (II),
- 1.5 to 3% in all of the biphenylbicyclohexyldialkyl(s) of formula (III), and
- 3 to 4% in all of the dicyanoalkoxyphenyl alkylcyclohexylcarboxylate (s) of formula IV.

13. Mixture of liquid crystals according to Claim 9 characterized in that the said mixture comprises :

- 12.2% of 1-(trans-4-n-ethylcyclohexyl)-2-[2'-fluoro-4'-(2-ethyl)-4-biphenylyl] ethane,
- 76.4% of the eutectic mixture of 1-(trans-4-n-propylcyclohexyl)-2-[2'-fluoro-4'-(2-pentyl)-4-piphenylyl] ethane of 1-(trans-4-n-propylcyclohexyl)-2-[2'-fluoro-4'-(2-ethyl)-4-biphenylyl] ethane and of 1-(trans-4-n-pentylcyclohexyl)-2-[2'-fluoro-4'-(2-ethyl)-4-biphenylyl] ethane.
- 6.2% by weight of the eutectic mixture of 2-fluoro-4-n-pentylphenyl 4-n-pentylbicyclooctanecarbolate and of 2-fluoro-4-n-heptylphenyl 4-n-pentylbicyclooctanecarboxylate,
- 2.5% by weight of 4α, 4'α-di-n-pentyl-1α,1'α-bicyclo-hexyl -4β-carbonitrile, and

– 2.7% by weight of 4-n-butoxy-2,3-dicyanophenyl trans-4-n-pentylcyclohexyl-1-carboxylate.

14. Mixture of liquid crystals according to either of Claims 1 and 8 characterized in that it comprises by weight :

– from 30 to 85% in all of the 1-(alkylcyclohexyl)-2-(alkylfluorobiphenylyl)ethane(s) of formula (I),
– from 0 to 20% in all of the alkylfluorophenyl alkylbicyclooctanecarbolate(s) of formula (II),
– from 0 to 12% in all of the biphenylbicycloheldialkyl(s) of formula (III),
– from 0 to 12% in all of the dicyanoalkoxyphenyl alkylcyclohexylcarooxylate (s) of formula (IV),
– from 0 to 40% in all of the bicyclohelcarbonitriledialkyl (s) or alkylalkylene (s) of formula (V),
– from 0 to 12% in all of the dicyanoalkoxyphenyl alkylcyclohexylbenzoate(s) of formula (VI), and
– from 15 to 40% in all of the cyclohexylbiphenyl(s) of formula VII.

15. Mixture of liquid crystals according to Claim 14, characterized in that it comprises by weight :

– from 75 to 85% in all of the 1-(alkylcyclohel)-2-(alkylfluorobiphenylyl)ethane(s) of formula (I),
– from 14 to 18% in all of the cyclohexylbiphenyl(s) of formula (VII), and
– from 1 to 7% in all of the dicyanoalkoxyphenyl alkylcyclohelcarboxylate(s) of formula (IV) and/or of the bicyclohexylcarbonitriledialkyl(s) or alkylalkylene(s) of formula (V) .

16. Mixture of liquid crystals according to Claim 14, characterized in that it comprises by weight :

– from 35 to 45% in all of the 1-(alkylcyclohexyl)-2-(alkylfluorobiphenylyl) ethane(s) of formula (I),
– from 30 to 40% in all of the cyclohexylbiphenyl(s) of formula (VII), and
– from 15 to 30% in all of one or more compounds chosen from the alkylfluorophenyl alkylbicyclooctanecarboxylates of formula (II), the biphenlbicyclohexyldialkyls of formula (III) the dicyanoalkoxyphenyl alkylcyclohelcarboxylates of formula (IV), the bicyclohexylcarbonitriledialkyls or alkylalkylenes of formula (V) and the dicyanoalkoxyphenyl alkylcyclohexylbenzoates of formula (VI).

17. Liquid crystal device using the electrically controlled birefringence effect, characterized in that it comprises a mixture of liquid crystals which is obtained according to any one of Claims 1 to 16.

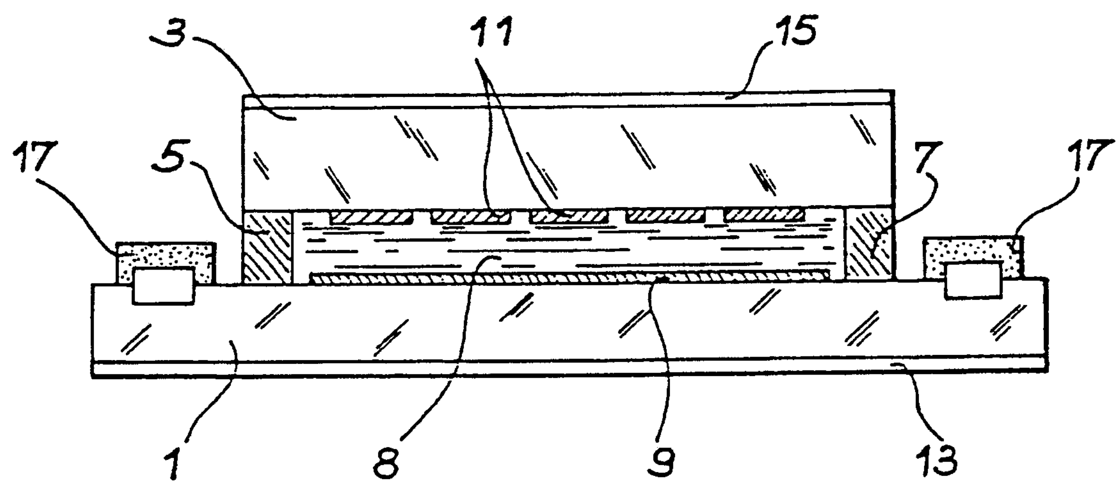
3
11
15
17
5
7
17
1
8
9
13